# EUROPEAN PATENT SPECIFICATION

(11) **EP 2 961 204 B1**
(45) Date of publication and mention of the grant of the patent: **13.06.2018**
(21) Application number: 13875742.2
(22) Date of filing: 23.08.2013
(51) Int. Cl.: H04W 4/12, H04W 88/16, H04W 12/06, H04L 29/06, H04W 88/18, H04L 12/58

(54) **METHOD AND DEVICE FOR IMPLEMENTING INSTANT MESSAGING IN PLACE OF A MOBILE USER EQUIPMENT**
VERFAHREN UND VORRICHTUNG ZUR DURCHFÜHRUNG EINES SOFORTNACHRICHTENDIENSTES FÜR EINE MOBILE BENUTZERVORRICHTUNG
PROCÉDÉ ET DISPOSITIF D'IMPLÉMENTATION DE MESSAGERIE INSTANTANÉE AU LIEU D'UN ÉQUIPEMENT D'UTILISATEUR MOBILE

(30) Priority: 22.02.2013 CN 201310057679
(43) Date of publication of application: 30.12.2015
(73) Proprietor: ZTE Corporation, Shenzhen, Guangdong 518057 (CN)
(72) Inventor: CUI, Zhenfeng, Shenzhen Guangdong 518057 (CN); LU, Jianfeng, Shenzhen Guangdong 518057 (CN); QIN, Yantao, Shenzhen Guangdong 518057 (CN)
(74) Representative: Carangelo, Pierluigi
(86) International application number: PCT/CN2013/082165
(87) International publication number: WO 2014/127615

(56) References cited:
- CN-A- 101 212 423
- CN-A- 101 784 017
- CN-A- 102 014 080
- US-A1- 2009 254 628
- US-A1- 2010 153 506
- US-A1- 2013 024 565

## Description

### Technical Field

The present invention relates to the technical field of communications, in particular to a method and device for implementing instant messaging for Mobile User Equipment (M-UE).

### Background

With the large-scale construction of the 3G network and the popularization of the smart phone, the instant messaging has a wider using space. The existing instant messaging protocol, network architecture and the like are mainly designed for broadband Personal Computer (PC) clients. If being developed directly according to the original communication protocol, the M-UE may consume a lot of network traffic when using the most common functions, such as login, standby and chatting. Moreover, when answering or making a call, the mobile phone may be disconnected from the network frequently if in a place where the signal is weaker or a crowd is gathered; and after being connected with the network, the M-UE may log back in, and the frequent login may cause a large impact on the existing instant messaging system.

US2013024565 A1 provides a system and method to publish information from servers to remote monitor devices; however, the above mentioned problem still remains unsolved.

### Summary

In order to solve the technical problem that the existing instant messaging protocol and network architecture are not applicable to M-UE, embodiments of the present invention provide a method (as defined in claim 1) and device (as defined in claim 8) for implementing instant messaging for the M-UE via a Mobile Gateway (M-GW).

### Brief Description of the Drawings

Fig. 1 is a diagram showing the networking of an M-GW sub-system for implementing instant messaging for an M-UE in an embodiment of the present invention;
Fig. 2 is a diagram of a method for implementing instant messaging for an M-UE in an embodiment of the present invention;
Fig. 3 is a diagram of a device for implementing instant messaging for an M-UE in an embodiment of the present invention;
Fig. 4 is a flowchart of a login signaling in a method for implementing instant messaging for an M-UE in an embodiment of the present invention; and
Fig. 5 is a flowchart of an abnormality recovering signaling in a method for implementing instant messaging for an M-UE in an embodiment of the present invention.

### Detailed Description of the Embodiments

To be understood better, the present invention is further described below with combination with the drawings and the embodiments.

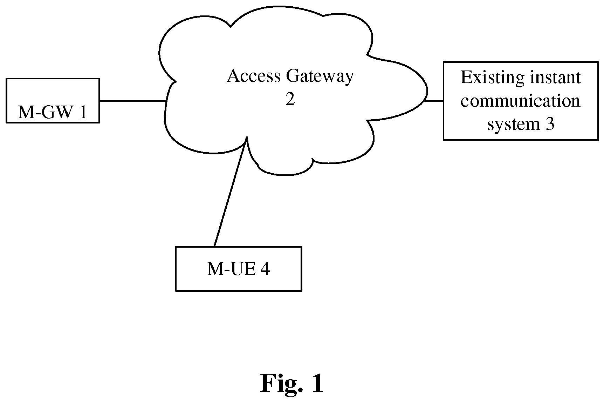

Fig. 1 shows an M-GW sub-system for implementing instant messaging for an M-UE in an embodiment of the present invention, and the M-GW sub-system includes an M-UE 4, an existing instant messaging system 3 and an M-GW 1 which are connected through an access network 2. The M-UE 4 accesses the existing instant messaging system 3 through the M-GW 1; a customized simplified private protocol is used between the M-UE4 and the M-GW1, and the existing communication protocol is used between the M-GW1 and the existing instant messaging system 3.

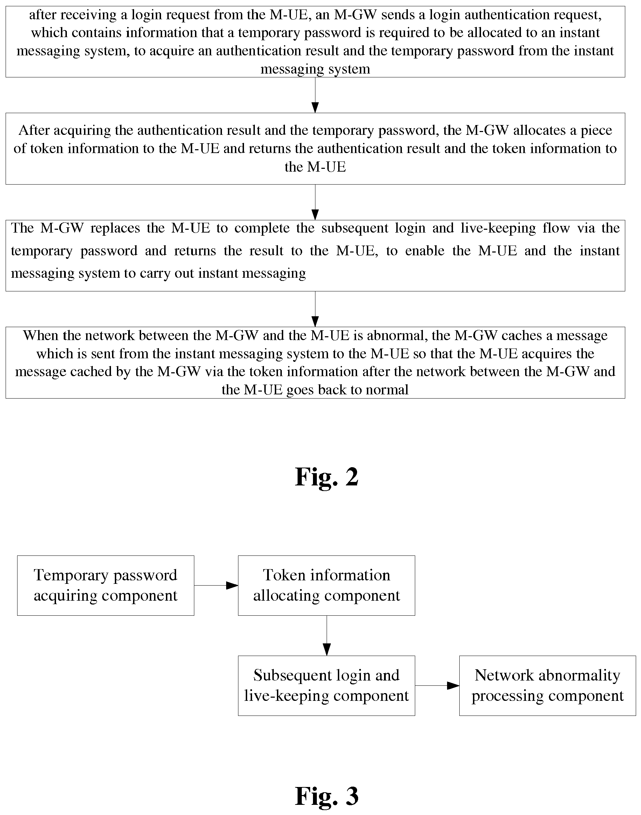

Fig. 2 shows a method for implementing instant messaging for an M-UE via the M-GW sub-system shown in Fig. 1 in an embodiment of the present invention, the method includes Step A to Step D.

Step A: The M-GW, after receiving a login request from the M-UE, sends a login authentication request, which contains the information that a temporary password is required to be allocated, to an instant messaging system to acquire an authentication result and the temporary password from the instant messaging system.

Step B: After acquiring the authentication result and the temporary password, the M-GW allocates a piece of token information to the M-UE and returns the authentication result and the token information to the M-UE.

Step C: The M-GW replaces the M-UE to complete the subsequent login and live-keeping flow via the temporary password and returns the result to the M-UE, to facilitate the M-UE and the instant messaging system to carry out instant messaging.

Step D: When the network between the M-GW and the M-UE is abnormal, the M-GW caches a message which is sent from the instant messaging system to the M-UE so that the M-UE acquires the message cached by the M-GW via the token information after the network between the M-GW and the M-UE goes back to normal.

Step A further includes: after receiving the login request which is initiated by the M-UE through a private protocol, the M-GW reconstructs the login request by adding extended information that a temporary password is required to be allocated, and sends the reconstructed login request to the instant messaging system; and the instant messaging system allocates and stores the temporary password after the login authentication is passed, and returns the authentication result and the allocated temporary password to the M-GW.

The operation that the M-GW replaces the M-UE to complete the subsequent login and live-keeping flow via the temporary password may include: the subsequent login flow, which includes acquiring contact information of the M-UE from the instant messaging system and other operation, is implemented by using the temporary password, and the M-UE is notified of the acquired information and the operation result through a private signaling; and the M-UE is replaced to initiate a request for keeping the registration, session and link between the M-UE and the instant messaging system live by using the temporary password.

The process that the M-UE acquires the message cached by the M-GW via the token information may include: the M-UE initiates a registration recovering request to the M-GW through the private protocol and the carried token information; and the M-GW compares whether the token information from the M-UE matches, and if so, the M-UE is notified of the cached message gradually through the private protocol.

Particularly, the operation that the subsequent login flow, including acquiring contact information of the M-UE from the instant messaging system and other operation, is implemented via the temporary password may include: the M-GW actively initiates a subsequent login flow request containing the temporary password to the instant messaging system; and the instant messaging system authenticates the request from the M-GW via the temporary password stored therein, and returns a processing result related to the request to the M-GW if the authentication is passed (namely, the stored temporary password is consistent with that in the request).

In addition, after caching the message which is sent from the instant messaging system to the M-UE, the M-GW actively constructs a processing result after receiving the message correctly and returns the result to the instant messaging system.

The instant messaging system in the embodiment may be the existing Internet or the similar network.

Fig. 3 shows a device for implementing instant message for an M-UE in an embodiment of the present invention, and the device is generally arranged in an M-GW and includes:
a temporary password acquiring component configured to, after the M-GW receives a login request from the M-UE, send a login authentication request, which contains information that a temporary password is required to be allocated, to an instant messaging system to acquire an authentication result and the temporary password from the instant messaging system;
a token information allocating component configured to, after the M-GW acquires the authentication result and the temporary password, allocate a piece of token information to the M-UE and return the authentication result and the token information to the M-UE;
a subsequent login and live-keeping component configured to replace the M-UE to complete the subsequent login and live-keeping flow by using the temporary password and return the result to the M-UE, to facilitate the M-UE and the instant messaging system to carry out instant messaging; and
a network abnormality processing component configured to, when the network between the M-GW and the M-UE is abnormal, cache a message which is sent from the instant messaging system to the M-UE so that the M-UE acquires the message cached by the M-GW by using the token information after the network between the M-GW and the M-UE goes back to normal.

Preferably, the temporary password acquiring component may include a login request reconstruction element (not shown), which is configured to, after the M-GW receives the login request from the M-UE, reconstruct the login request by adding extended information that the temporary password is required to be allocated, and send the reconstructed login request to the instant messaging system.

In addition, the subsequent login and live-keeping component includes: a subsequent login flow processing element (not shown), which is configured to implement subsequent login flow, which includes acquiring contact information of the M-UE from the instant messaging system and other operation, by using the temporary password, and notify the M-UE of the acquired information and the operation result through a private signaling; and a live-keeping request element (not shown), which is configured to replace the M-UE to initiate a request of keeping the registration, session and link between the M-UE and the instant messaging system live by using the temporary password.

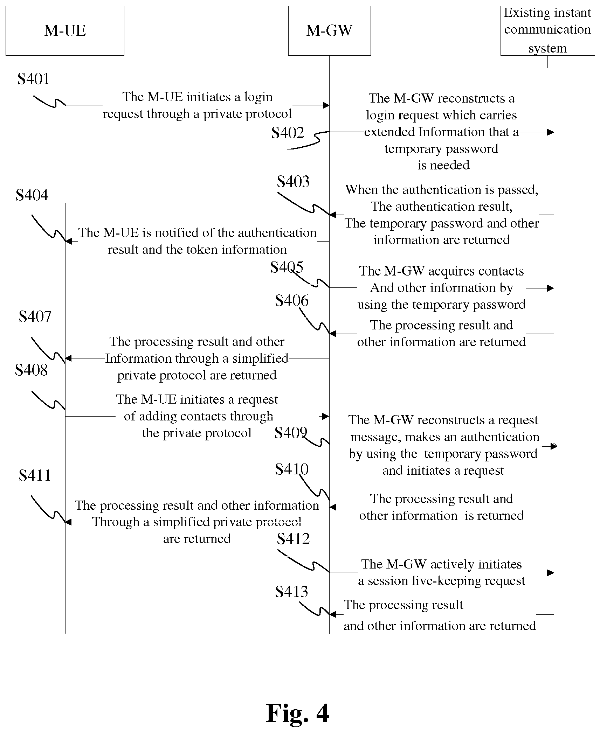

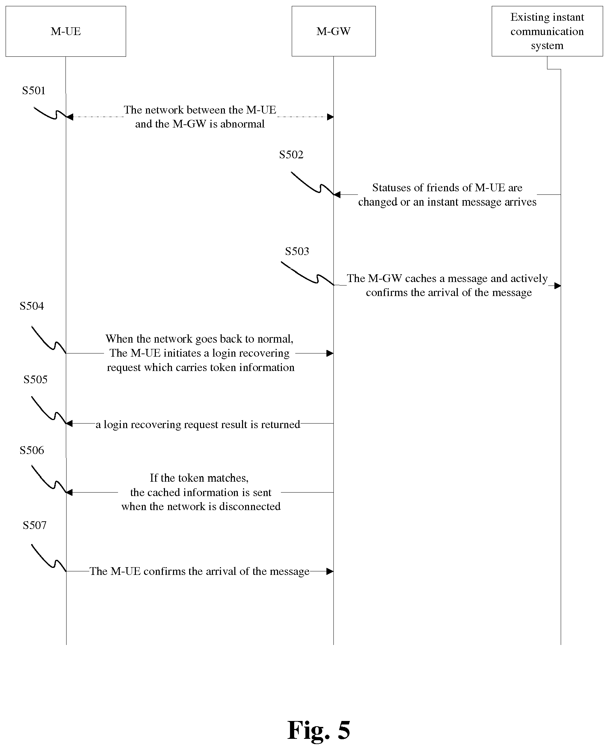

In order to fully understand the operation of implementing instant messaging for the M-UE via the M-GW sub-system in the present invention, the instant messaging of the M-UE in the embodiment is further described below in combination with Figs. 4 and 5.

Fig. 4 shows a flowchart of a login signaling in a method for implementing instant messaging for an M-UE in an embodiment of the present invention, which is the implementation flow of accessing the existing instant messaging system by the M-UE through the M-GW, including the following steps:
Step 401: The M-UE initiates a login request to an instant messaging system to the M-GW through a simplified private protocol.
Step 402: The M-GW reconstructs the login request via the existing instant messaging protocol, wherein the reconstructed login request carries extended information that a temporary password is required to be allocated, and is sent to the existing instant messaging system.
Step 403: The existing instant messaging system processes the login request, generates the temporary password as required (the temporary password is used for the authentication of a subsequent request message), and finally sends the authentication result and the temporary password to the M-GW.
Step 404: The M-GW acquires the temporary password, generates token information for the login of the M-UE (the token information is used for the abnormality recovery of the network), and sends the authentication result and the token information to the M-UE through a private protocol.
Step 405: The M-GW actively initiates subsequent login flow by using the temporary password information. For example, the M-GW initiates a request of acquiring information and statuses of friends and the like to the existing instant messaging system.
Step 406: The existing instant messaging system authenticates the login request initiated by the M-GW by using the temporary password, and returns the processing result of the request message from the M-GW if the authentication is passed.
Step 407: The M-GW, after receiving the processing result, converts the processing result into a private protocol signaling which is sent to the M-UE.
Steps 408 to 411: A request of adding contacts is initiated for the M-UE, wherein the flow is a typical flow of actively processing the request by UE in the M-GW sub-system.
Step 408: The M-UE initiates the request of adding contacts to the M-GW through the private protocol.
Step 409: The M-GW reconstructs the request according to the protocol of the existing instant messaging system, and takes the temporary password as authentication information to initiate the request of adding contacts to the instant messaging system.
Step 410: After passing the authentication via the temporary password, the existing instant messaging system returns the processing result to the M-GW.
Step 411: The M-GW converts the processing result into the signaling of a private protocol which is returned to the M-UE.
Steps 412 to 413: The M-GW replaces the M-UE to keep the registration, session, link and other information between the M-UE and the existing instant messaging system live, so that in one aspect, the network traffic of the M-UE is reduced, and in another aspect, the M-UE is still normal in the existing messaging system even the network of the M-UE is abnormal.
Step 412: The M-GW replaces the M-UE to initiate a request for keeping the registration, session and link between the M-UE and the existing instant messaging system live by using the temporary password.
Step 413: The existing instant messaging system returns a processing result of the live-keeping request.

Because most of query request, the subsequent client request, the session live-keeping request and the like need to be authenticated when user equipment logs in, the present invention puts forwards a way of authenticating the M-GW and the existing instant messaging system through the temporary password, namely, the problem of insecurity of user information caused by sending the user password to the M-GW is solved, and the network traffic consumed every time the M-UE participates in the authentication is avoided. Most of the functions, such as querying a request, authenticating a request, and reporting an error by a session are implemented by the M-GW when the client logs in, and a private customized simplified communication protocol is used between the M-GW and the M-UE, so that the network flow in the using process of the M-UE is greatly reduced.

Fig. 5 shows the flow of an abnormality recovering signaling in a method for implementing instant messaging for an M-UE in an embodiment of the present invention, which is the processing flow after the network between the M-UE and the M-GW is abnormal and the network goes back to normal, wherein the method includes the following steps:
Step 501: Due to the instability of the mobile network, the network between the M-UE and the M-GW is usually disconnected, and it is assumed the network is abnormal at the moment.
Step 502: The M-GW and the existing instant messaging system keep live normally, so that the existing instant messaging system considers that the M-UE is in a normal status; and when the statuses of friends of the M-UE are changed or there is an instant message to be sent to the M-UE, these messages arrive at the M-GW normally.
Step 503: The M-GW caches the received change of statuses of friends and instant message of the M-UE and actively constructs a correct processing result and returns the result to the existing instant messaging system.
Step 504: The network between the M-UE and the M-GW is recovered, and the M-UE initiates a login request for recovering abnormality, wherein the request message carries token information.
Step 505: The M-GW receives the login request for recovering abnormality, verifies whether the token matches, and returns the processing result to the M-UE (if the token does not match, the M-UE may initiate a re-login request, and the specific flow is the same as what is described in Fig. 2).
Step 506: If the token information matches, the M-GW notifies the M-UE of the cached status and instant message and other information through a private protocol.
Step 507: After receiving the information, the M-UE notifies the M-GW of the processing result.

Due to the instability of the mobile network, the M-GW keeps session and other information live in the M-GW sub-system; when the network is abnormal, the M-GW caches a message transmitted by the existing instant messaging system within a period of time and keeps the M-UE in a correct status in the instant messaging system; and after the network goes back to normal, the M-GW notifies the M-UE of the cached information gradually, thus, the problem of frequent login of the client caused by the abnormality of the network is solved, i.e., the impact on the existing instant messaging system caused by the frequent login and the increase of traffic of the client caused by the frequent login.

To sum up, the embodiments have the following technical effects:
1) The communication protocol between the M-GW and the existing instant messaging system is nearly unchanged, so that a small change is made to the existing instant messaging system (or even negligible).
2) A brand-new private communication protocol customized for the M-UE is used between the M-GW and the M-UE, so that the network flow generated in the using process of the M-UE is reduced greatly.
3) The message between the M-GW and the existing instant messaging system is authenticated by using the temporary password, and the M-GW may completely replace the M-UE to keep the link, various sessions and other information between the M-GW and the existing instant messaging system live, so that the network flow of the M-UE is greatly reduced in the stand-by process.
4) When the network between the M-UE and the M-GW is abnormal, the M-GW caches such information as statuses of friends and instant message and notifies the M-UE of the information after the network between the M-UE and the M-GW goes back to normal, so that the problem that the frequent login of the M-UE may cause impact to the existing instant messaging system is solved, and the network traffic of the M-UE is saved.

What said above are only the preferred embodiments of the present invention and not intended to limit the present invention, and any modifications, equivalent replacements, improvements and the like made within the principle of the present invention shall fall within the scope of protection of the present invention as defined by the claims.

## Claims

1. A method for implementing instant communication for Mobile User Equipment (M-UE), comprising:
after a Mobile Gateway (M-GW) receives a login request from the M-UE, sending, by the M-GW, a login authentication request, which contains information that a temporary password is required to be allocated, to an instant messaging system to acquire an authentication result and the temporary password from the instant messaging system;
after the M-GW acquires the authentication result and the temporary password, M-GW allocating a piece of token information to the M-UE and returning the authentication result and the token information to the M-UE;
the M-GW, in place of the M-UE, actively initiating the subsequent login and actively initiating a request for live-keeping flow by using the temporary password and returning a result to the M-UE to enable the M-UE and the instant messaging system to carry out instant messaging; and
when a network between the M-GW and the M-UE is abnormal, caching, by the M-GW, a message which is sent from the instant messaging system to the M-UE to enable the M-UE to acquire the message cached by the M-GW via the token information after the network between the M-GW and the M-UE goes back to normal.

2. The method according to claim 1, **characterized in that** after the M-GW receives a login request from the M-UE, sending, by the M-GW, the login authentication request which contains the information that a temporary password is required to be allocated to an instant messaging system to acquire the authentication result and the temporary password from the instant messaging system comprises:
after the M-GW receives the login request which is initiated by the M-UE through a private protocol, the M-GW re-constructing the login request by adding extended information that a temporary password is required to be allocated, and sending the re-constructed login request to the instant messaging system; and
the instant messaging system allocating and storing the temporary password after the login authentication is passed, and returning the authentication result and the allocated temporary password to the M-GW.

3. The method according to claim 2, **characterized in that** the M-GW, in place of the M-UE, actively initiating the subsequent login and actively initiating a request for live-keeping flow by using the temporary password comprises:
the M-GW implementing the subsequent login flow, which comprises acquiring contact information of the M-UE from the instant messaging system, by using the temporary password, and notifying the M-UE of the acquired contact information and an operation result through a private signaling; and
the M-GW, in place of the M-UE, actively initiating, by using the temporary password, a request for keeping the registration, session and link between the M-UE and the instant messaging system live.

4. The method according to claim 2, **characterized in that** acquiring, by the M-UE, the message cached by the M-GW via the token information comprises:
initiating, by the M-UE, a registration recovering request to the M-GW through the private protocol and the carried token information; and
comparing, by the M-GW, whether the token information from the M-UE matches, and if the token information from the M-UE matches, sending respectively to the M-UE the cached message through the private protocol.

5. The method according to claim 3, **characterized in that** implementing the subsequent login flow, which comprises acquiring contact information of the M-UE from the instant messaging system, via the temporary password comprises:
actively initiating, by the M-GW, a subsequent login flow request containing the temporary password to the instant messaging system; and
the instant messaging system authenticating the subsequent login flow request from the M-GW by using a temporary password stored in the instant messaging system, and returning a processing result related to the subsequent login flow request to the M-GW based on that the authentication is passed.

6. The method according to claim 3, **characterized in that** after the M-GW caches the message which is sent from the instant messaging system to the M-UE, the M-GW actively constructing a processing result after receiving the message correctly and returning the processing result to the instant messaging system.

7. The method according to any one of the claims, **characterized in that** the instant messaging system is an internet.

8. A device for implementing instant messaging for an M-UE, comprising the following components arranged in an M-GW:
a temporary password acquiring component configured to, after the M-GW receives a login request from the M-UE, send a login authentication request which contains information that a temporary password is required to be allocated to an instant messaging system to acquire an authentication result and the temporary password from the instant messaging system;
a token information allocating component configured to, after the M-GW acquires the authentication result and the temporary password, allocate a piece of token information to the M-UE and return the authentication result and the token information to the M-UE;
a subsequent login and live-keeping component configured to, in place of the M-UE, actively initiate the subsequent login and actively initiate a request for live-keeping flow via the temporary password and return a result to the M-UE to enable the M-UE and the instant messaging system to carry out instant messaging; and
a network abnormality processing component configured to, when a network between the M-GW and the M-UE is abnormal, cache a message which is sent from the instant messaging system to the M-UE to enable the M-UE to acquire the message cached by the M-GW via the token information after the network between the M-GW and the M-UE goes back to normal.

9. The device according to claim 8, **characterized in that** the temporary password acquiring component comprises a login request reconstruction element configured to, after the M-GW receives a login request from the M-UE, reconstruct the login request by adding extended information that the temporary password is required to be allocated, and send the reconstructed login request to the instant messaging system.

10. The device according to claim 9, **characterized in that** the subsequent login and live-keeping component comprises:
a subsequent login flow processing element configured to implement subsequent login flow, which comprises acquiring contact information of the M-UE from the instant messaging system via the temporary password, and notify the M-UE of the acquired contact information and an operation result through a private signaling; and
a live-keeping request element configured to, in place of the M-UE, actively initiate a request of keeping a registration, session and link between the M-UE and the instant messaging system live via the temporary password.

## Patentansprüche

1. Verfahren zum Realisieren eines Sofortnachrichtendienstes (Instant Messaging) für eine mobile Benutzervorrichtung (Mobile User Equipment, M-UE), umfassend:
nachdem ein Mobil-Gateway (M-GW) eine Anmeldeanforderung von der M-UE empfangen hat, Senden einer Anmelde-Authentifizierungsanforderung durch das M-GW, die Informationen enthält, dass ein zeitweiliges Kennwort zugewiesen werden muss, an ein Instant-Messaging-System, um vom Instant-Messaging-System ein Authentifizierungsergebnis und das zeitweilige Kennwort zu erhalten;
nachdem das M-GW das Authentifizierungsergebnis und das zeitweilige Kennwort erhalten hat, durch das M-GW Zuweisen von Token-Informationen zur M-UE und Zurückgeben des Authentifizierungsergebnisses und der Token-Informationen an die M-UE;
durch das M-GW anstelle der M-UE aktives Auslösen der nachfolgenden Anmeldung und aktives Auslösen einer Anforderung eines Keepalive-Ablaufs, indem das zeitweilige Kennwort verwendet und ein Ergebnis an die M-UE zurückgegeben wird, um die M-UE und das Instant-Messaging-System zur Durchführung von Instant Messaging zu aktivieren; und
bei einem gestörten Netzwerk zwischen der M-GW und der M-UE durch das M-GW Zwischenspeichern einer Nachricht, die vom Instant-Messaging-System an die M-UE gesendet wird, um es der M-UE zu ermöglichen, nach der Rückkehr des Netzwerks zwischen dem M-GW und der M-UE zum Normalbetrieb die durch das M-GW über die Token-Informationen zwischengespeicherte Nachricht zu erhalten.

2. Verfahren nach Anspruch 1, **dadurch gekennzeichnet, dass**, nachdem das M-GW eine Anmeldeanforderung von der M-UE empfangen hat, das Senden der Anmelde-Authentifizierungsanforderung durch das M-GW, die die Informationen enthält, dass ein zeitweiliges Kennwort zugewiesen werden muss, an ein Instant-Messaging-System, um das Authentifizierungsergebnis und das zeitweilige Kennwort vom Instant-Messaging-System zu erhalten, umfasst:
nachdem das M-GW die Anmeldeanforderung empfangen hat, die durch die M-UE über ein privates Protokoll ausgelöst wird, durch das M-GW Rekonstruieren der Anmeldeanforderung, indem erweiterte Informationen hinzugefügt werden, dass ein zeitweiliges Kennwort zugewiesen werden muss, und Senden der rekonstruierten Anmeldeanforderung an das Instant-Messaging-System; und
Zuweisen und Speichern des zeitweiligen Kennwortes durch das Instant-Messaging-System nach der Übergabe der Anmeldeauthentifizierung und Zurückgeben des Authentifizierungsergebnisses und des zugewiesenen zeitweiligen Kennwortes an das M-GW.

3. Verfahren nach Anspruch 2, **dadurch gekennzeichnet, dass** das aktive Auslösen der nachfolgenden Anmeldung und das aktive Auslösen einer Anforderung eines Keepalive-Ablaufs durch Verwenden des zeitweiligen Kennwortes durch das M-GW anstelle der M-UE umfasst:
durch das M-GW Realisieren des Ablaufs der nachfolgenden Anmeldung, der das Erhalten von Kontaktinformationen der M-UE vom Instant-Messaging-System unter Verwendung des zeitweiligen Kennwortes und Benachrichtigen der M-UE über die erhaltenen Kontaktinformationen und das Operationsergebnis durch eine private Signalisierung umfasst; und
durch das M-GW anstelle der M-UE aktives Auslösen, unter Verwendung des zeitweiligen Kennwortes, einer Anforderung zur Keepalive-Aufrechterhaltung der Registrierung, Sitzung und Verbindung zwischen der M-UE und dem Instant-Messaging-System.

4. Verfahren nach Anspruch 2, **dadurch gekennzeichnet, dass** das Erhalten der durch das M-GW über die Token-Informationen zwischengespeicherten Nachricht durch die M-UE umfasst:
durch die M-UE Auslösen einer Anforderung zur Registrierungswiederherstellung an das M-GW über das private Protokoll und die transportierten Token-Informationen; und
durch das M-GW Vergleichen, ob die Token-Informationen von der M-UE übereinstimmen, und bei übereinstimmenden Token-Informationen von der M-UE entsprechendes Senden der zwischengespeicherten Nachricht über das private Protokoll an die M-UE.

5. Verfahren nach Anspruch 3, **dadurch gekennzeichnet, dass** das Realisieren des Ablaufs der nachfolgenden Anmeldung, umfassend das Erhalten von Kontaktinformationen der M-UE vom Instant-Messaging-System, über das zeitweilige Kennwort umfasst:
durch das M-GW aktives Auslösen einer Anforderung des Ablaufs der nachfolgenden Anmeldung, die das zeitweilige Kennwort enthält, an das Instant-Messaging-System; und
durch das Instant-Messaging-System Authentifizieren der Anforderung des Ablaufs der nachfolgenden Anmeldung vom M-GW unter Verwendung eines zeitweiligen Kennwortes, das im Instant-Messaging-System gespeichert ist, und Zurückgeben eines Verarbeitungsergebnisses im Zusammenhang mit der Anforderung des nachfolgenden Anmeldeablaufs an das M-GW auf der Grundlage dessen, dass die Authentifizierung erfolgreich war.

6. Verfahren nach Anspruch 3, **dadurch gekennzeichnet, dass**, nachdem das M-GW die Nachricht zwischengespeichert hat, die vom Instant-Messaging-System an die M-UE gesendet wurde, das M-GW nach korrektem Empfangen der Nachricht und Zurückgeben des Verarbeitungsergebnisses an das Instant-Messaging-System aktiv ein Verarbeitungsergebnis aufbaut.

7. Verfahren nach einem der Ansprüche, **dadurch gekennzeichnet, dass** das Instant-Messaging-System ein Internet ist.

8. Vorrichtung zur Realisierung von Instant Messaging für eine M-UE, umfassend die folgenden in einem M-GW angeordneten Komponenten:
eine Komponente zum Erhalten zeitweiliger Kennwörter, die eingerichtet ist, um nach dem Empfang einer Anmeldeanforderung von der M-UE durch das M-GW eine Anmelde-Authentifizierungsanforderung, die Informationen enthält, dass ein zeitweiliges Kennwort zugewiesen werden muss, an ein Instant-Messaging-System zu senden, um ein Authentifizierungsergebnis und das zeitweilige Kennwort vom Instant-Messaging-System zu erhalten;
eine Zuweisungskomponente für Token-Informationen, die eingerichtet ist, um nach dem Erhalt des Authentifizierungsergebnisses und des zeitweiligen Kennwortes durch das M-GW eine Token-Information der M-UE zuzuweisen und das Authentifizierungsergebnis und die Token-Informationen an die M-UE zurückzugeben;
eine Komponente für die nachfolgende Anmeldung und für Keepalive, die eingerichtet ist, um anstelle der M-UE aktiv die nachfolgende Anmeldung auszulösen und aktiv eine Anforderung für den Keepalive-Ablauf über das zeitweilige Kennwort auszulösen und ein Ergebnis an die M-UE zurückzugeben, um es der M-UE und dem Instant-Messaging-System zu ermöglichen, Instant Messaging durchzuführen; und
eine Komponente zum Verarbeiten von Netzwerkstörungen, die eingerichtet ist, um bei einer Störung des Netzwerks zwischen dem M-GW und der M-UE eine Nachricht zwischenzuspeichern, die vom Instant-Messaging-System an die M-UE gesendet wird, um es der M-UE zu ermöglichen, nach der Rückkehr des Netzwerks zwischen dem M-GW und der M-UE zum Normalbetrieb die Nachricht zu erhalten, die durch das M-GW über die Token-Informationen zwischengespeichert wurde.

9. Vorrichtung nach Anspruch 8, **dadurch gekennzeichnet, dass** die Komponente zum Erhalten zeitweiliger Kennwörter ein Element zum Rekonstruieren von Anmeldeanforderungen umfasst, das eingerichtet ist, um nach dem Empfang einer Anmeldeanforderung von der M-UE durch das M-GW die Anmeldeanforderung durch Hinzufügen von erweiterten Informationen zu rekonstruieren, dass das zeitweilige Kennwort zugewiesen werden muss, und die rekonstruierte Anmeldeanforderung an das Instant-Messaging-System zu senden.

10. Vorrichtung nach Anspruch 9, **dadurch gekennzeichnet, dass** die Komponente für die nachfolgende Anmeldung und für Keepalive umfasst:
ein Verarbeitungselement für den Ablauf der nachfolgenden Anmeldung, das eingerichtet ist, um den Ablauf der nachfolgenden Anmeldung zu realisieren, der das Erhalten von Kontaktinformationen der M-UE vom Instant-Messaging-System über das zeitweilige Kennwort und die Benachrichtigung der M-UE über die erhaltenen Kontaktinformationen und das Operationsergebnis über eine private Signalisierung umfasst; und
ein Keepalive-Anforderungselement, das eingerichtet ist, um anstelle der M-UE aktiv eine Anforderung zur Aufrechterhaltung einer Registrierung, Sitzung und Verbindung zwischen der M-UE und dem Instant-Messaging-System über das zeitweilige Kennwort auszulösen.

## Revendications

1. Procédé d'implémentation d'une communication instantanée pour un équipement d'utilisateur mobile (M-UE) comportant :
après qu'une passerelle mobile (M-GW) a reçu une requête d'identification de la part du M-UE, la M-GW envoie une requête d'authentification d'identification, qui contient des informations selon lesquelles un mot de passe temporaire doit être attribué, à un système de messagerie instantanée en vue d'acquérir un résultat d'authentification et le mot de passe temporaire à partir du système de messagerie instantanée ;
après que la M-GW a acquis le résultat d'authentification et le mot de passe temporaire, la M-GW attribue une information de jeton au M-UE et renvoie le résultat d'authentification et les informations de jeton au M-UE ;
la M-GW, au lieu du M-UE, initie activement l'identification ultérieure et initie activement une requête pour un flux de maintien en service à l'aide du mot de passe temporaire et renvoie un résultat au M-UE afin de permettre au M-UE et au système de messagerie instantanée de réaliser la messagerie instantanée ; et
lorsqu'un réseau entre la M-GW et le M-UE est anormal, la M-GW met en cache un message qui est envoyé du système de messagerie instantanée au M-UE afin de permettre au M-UE d'acquérir le message mis en cache par la M-GW par le biais des informations de jeton après que le réseau entre la M-GW et le MUE est revenu à la normale.

2. Procédé selon la revendication 1, **caractérisé en ce que**, après que la M-GW a reçu une requête d'identification de la part du M-UE, la M-GW envoie la requête d'authentification d'identification qui contient les informations selon lesquelles un mot de passe temporaire doit être attribué à un système de messagerie instantanée en vue d'acquérir le résultat d'authentification et le mot de passe temporaire à partir du système de messagerie instantanée, comportant :
après que la M-GW a reçu la requête d'identification qui est initiée par le M-UE à travers un protocole privé, la M-GW reconstruit la requête d'identification par l'ajout d'informations étendues selon lesquelles un mot de passe temporaire doit être attribué et envoie la requête d'identification reconstruite au système de messagerie instantanée ; et
le système de messagerie instantanée attribue et mémorise le mot de passe temporaire après que l'authentification d'identification a réussi et renvoie le résultat d'authentification et le mot de passe temporaire attribué à la M-GW.

3. Procédé selon la revendication 2, **caractérisé en ce que** la M-GW, au lieu du M-UE, initie activement l'identification ultérieure et initie activement une requête pour un flux de maintien en service à l'aide du mot de passe temporaire, comportant :
la M-GW implémente le flux d'identification ultérieure qui comporte l'acquisition d'informations de contact du M-UE à partir du système de messagerie instantanée à l'aide du mot de passe temporaire et notifie le M-UE des informations de contact acquises et d'un résultat d'opération à travers un signalement privé ; et
la M -GW, au lieu du M-UE, initie activement, à l'aide du mot de passe temporaire, une requête de maintien en service de l'inscription, de la session et de la liaison entre le M-UE et le système de messagerie instantanée.

4. Procédé selon la revendication 2, **caractérisé en ce que** le M-UE acquiert le message mis en cache par la M-GW par le biais des informations de jeton, comportant :
l'initiation, par le M-UE, d'une requête de reprise d'inscription sur la M-GW à travers le protocole privé et les informations de jeton transportées ; et
la comparaison, par la M-GW, pour savoir si les informations de jeton provenant du M-UE correspondent et, si les informations de jeton provenant du M-UE correspondent, l'envoi respectivement au M-UE du message mis en cache à travers le protocole privé.

5. Procédé selon la revendication 3, **caractérisé par** l'implémentation du flux d'identification ultérieure, qui comporte l'acquisition d'informations de contact du M-UE à partir du système de messagerie instantanée, par le biais du mot de passe temporaire, comportant :
l'initiation active, par la M-GW, d'une requête de flux d'identification ultérieure contenant le mot de passe temporaire sur le système de messagerie instantanée ; et
l'authentification, par le système de messagerie instantanée, de la requête de flux d'identification ultérieure à partir de la M-GW à l'aide d'un mot de passe temporaire mémorisé dans le système de messagerie instantanée et le renvoi d'un résultat de traitement relatif à la requête de flux d'identification ultérieure à la M-GW sur la base du fait que l'authentification a réussi.

6. Procédé selon la revendication 3, **caractérisé en ce que**, après que la M-GW a mis en cache le message qui est envoyé à partir du système de messagerie instantanée au M-UE, la M-GW construit activement un résultat de traitement après réception correcte du message et renvoie le résultat de traitement au système de messagerie instantanée.

7. Procédé selon l'une quelconque des revendications, **caractérisé en ce que** le système de messagerie instantanée est un Internet.

8. Dispositif d'implémentation d'une messagerie instantanée pour un M-UE, comportant les composants suivants disposés dans une M-GW :
un composant d'acquisition de mot de passe temporaire configuré pour, après que la M-GW a reçu une requête d'identification de la part du M-UE, envoyer une requête d'authentification d'identification qui contient des informations selon lesquelles un mot de passe temporaire doit être attribué à un système de messagerie instantanée en vue d'acquérir un résultat d'authentification et le mot de passe temporaire de la part du système de messagerie instantanée ;
un composant d'attribution d'informations de jeton configuré pour, après que la M-GW a acquis le résultat d'authentification et le mot de passe temporaire, attribuer une information de jeton au M-UE et renvoyer le résultat d'authentification et les informations de jeton au M-UE ;
un composant d'identification ultérieure et de maintien en service configuré pour, au lieu du M-UE, initier activement l'identification ultérieure et initier activement une requête pour un flux de maintien en service par le biais du mot de passe temporaire et renvoyer un résultat au M-UE afin de permettre au M-UE et au système de messagerie instantanée de réaliser une messagerie instantanée ; et
un composant de traitement des anomalies de réseau configuré pour, lorsqu'un réseau entre la M-GW et le M-UE est anormal, mettre en cache un message qui est envoyé du système de messagerie instantanée au M-UE afin de permettre au M-UE d'acquérir le message mis en cache par la M-GW par le biais des informations de jeton après que le réseau entre la M-GW et le MUE est revenu à la normale.

9. Dispositif selon la revendication 8, **caractérisé en ce que** le composant d'acquisition de mot de passe temporaire comporte un élément de reconstruction de requête d'identification configuré pour, après que la M-GW a reçu une requête d'identification de la part du M-UE, reconstruire la requête d'identification par l'ajout d'informations étendues selon lesquelles le mot de passe temporaire doit être attribué, puis envoyer la requête d'identification reconstruite au système de messagerie instantanée.

10. Dispositif selon la revendication 9, **caractérisé en ce que** le composant d'identification ultérieure et de maintien en service comporte :
un élément de traitement de flux d'identification ultérieure configuré pour implémenter un flux d'identification ultérieure qui comporte l'acquisition d'informations de contact du M-UE à partir du système de messagerie instantanée par le biais du mot de passe temporaire et notifier le M-UE des informations de contact acquises et d'un résultat d'opération à travers un signalement privé ; et
un élément de requête de maintien en service configuré pour, au lieu du M-UE, initier activement une requête de maintien en service d'une inscription, d'une session et d'une liaison entre le M-UE et le système de messagerie instantanée par le biais du mot de passe temporaire.
